# EUROPÄISCHE PATENTSCHRIFT

(11) **EP 3 643 759 B1**
(45) Veröffentlichungstag und Bekanntmachung des Hinweises auf die Patenterteilung: **23.03.2022**
(21) Anmeldenummer: 18202943.9
(22) Anmeldetag: 26.10.2018
(51) Int. Cl.: C09D 133/02

(54) **POLYCARBOXYLAT-BESCHICHTETER BANDSTAHL UND DESSEN VERWENDUNG ZUM TIEFZIEHEN**
POLYCARBOXYLATE COATED STEEL STRIP AND ITS USE FOR DEEP DRAWING
ACIER À FEUILLARD REVÊTU DE POLYCARBOXYLATE ET SON UTILISATION POUR L'EMBOUTISSAGE

(43) Veröffentlichungstag der Anmeldung: 29.04.2020
(73) Patentinhaber: Henkel AG & Co. KGaA, 40589 Düsseldorf (DE)
(72) Erfinder: Wolpers, Michael, 40699 Erkrath (DE); Cornen-Schaeuble, Sophie, 40597 Düsseldorf (DE)

(56) Entgegenhaltungen:
- WO-A1-99/12661
- JP-A- H 111 638
- US-A1- 2006 003 901
- US-A1- 2008 199 714

## Beschreibung

Die vorliegende Erfindung betrifft Bandstahl für einen Umformprozess, der ein- oder beidseitig mit einem metallischen Zink- oder Aluminiumüberzug versehen ist, wobei der Überzug auf zumindest einer Seite eine Beschichtung aufweist, die im Wesentlichen aus mindestens einem Polycarboxylat besteht und in einer Schichtauflage an Kohlenstoff realisiert ist, die im Bereich von 10 - 100 mg/m² liegt. Für das Tiefziehen besonders geeignete Beschichtungen werden dabei mit solchen Polycarboxylaten erzielt, deren gewichtsmittlere Molekülmasse jeweils größer als 100.000 g/mol ist. In einem weiteren Aspekt ist vorliegend ein Umformverfahren des erfindungsgemäß beschichteten Bandstahls durch Tiefziehen sowie ein aus dem tiefgezogenen Bandstahl hergestelltes Bauteil umfasst.

Elektrolytisch verzinkter oder schmelztauchveredelter und damit mit einem metallischen Überzug versehener Bandstahl wird vom Hersteller in Form von quasikontinuierlichem Band (Rollen, Spaltband) oder in Form von Bandabschnitten (Tafeln) geliefert und für den Transport zum Kunden temporär vor Korrosion geschützt und daher oberflächenbehandelt und beispielsweise chemisch passiviert oder phosphatiert und ggf. zusätzlich geölt. Beim Kunden wird der gelieferte verzinkte oder schmelztauchveredelte Bandstahl abgewickelt und abgetafelt und das Flacherzeugnis zur Herstellung komplexerer Halbzeuge und Bauteile umgeformt. Der Umformprozess beim Kunden beansprucht Prozessenergie, verschleißt die dort eingesetzten Umformwerkzeuge, erfordert eine hohe Präzision und verursacht Abrieb vom metallischen Überzug, der sich insbesondere beim Umformen durch Tiefziehen negativ auf die Oberflächengüte des umgeformten Bauteils auswirkt. Daher umfasst die Oberflächenbehandlung von mit einem metallischen Überzüg versehenem Bandstahl regelmäßig auch eine Konditionierung, die dem ausgelieferten Band bzw. den ausgelieferten Bandabschnitten verbesserte Umformeigenschaften verleiht.

Hierfür können bei der Bandherstellung werkseitig Umformhilfsmittel aufgebracht werden, die entweder allein oder im Zusammenwirken mit der zum temporären Schutz vor Korrosion herbeigeführten Oberflächenbehandlung das Umformverhalten positiv beeinflussen. So wird im Stand der Technik für elektrolytisch verzinkten Bandstahl durch eine Vorphosphatierung und Beölung des Bandes die Umformung erleichtert und gleichzeitig eine hohe Oberflächengüte des zum Bauteil umgeformten Bandes erzielt, da der Abrieb von Zinkmaterial und dessen mechanische Einarbeitung in die Oberfläche des Bandes beim Tiefziehen aufgrund der Phosphatierung weitestgehend unterbunden wird. Allerdings kann das Konzept der Vorphosphatierung von verzinktem Bandstahl wegen der für die Umformung erforderlichen hohen Gleichmäßigkeit in der Beschaffenheit der Phosphatierung nur mit erheblichen verfahrenstechnischen Aufwand auf durch Schmelztauchveredelung erhältlichen feuerverzinktem und legierungsverzinktem Bandstahl übertragen werden.

Die Prozessführung für eine Vorphosphatierung von mittels Schmelztauchveredelung erhältlichen mit metallischen Zink- oder Aluminium-Überzügen versehenen Bandstählen ist derart aufwendig, dass für solche Flacherzeugnisse im Stand der Technik gänzlich andere Konditionierungen eingeführt wurden, die jedoch den beim Tiefziehen verursachten Abrieb des metallischen Überzuges im Vergleich zu einer Vorphosphatierung oft weniger effektiv unterdrücken können. In diesem Zusammenhang ist die Aufbringung dünner Überzüge von Zinksulfaten, wie in der US 2008/0308192 dargestellt, hervorzuheben und jüngere Entwicklungen, wie die in der WO 2015/197430 beschriebene Auftragung anorganischer Sulfat-basierter Überzüge aus wässrigen alkalischen Lösungen der jeweiligen wasserlöslichen Alkalisalze, die jeweils als Ersatz für eine Vorphosphatierung dem elektrolytisch verzinktem oder schmelztauchveredeltem Bandstahl sowohl einen temporären Korrosionsschutz als auch ausreichende Umformeigenschaften verleihen und zudem eine nachfolgende vor Korrosion schützende Vorbehandlung der umgeformten Bauteile mittels konventioneller nasschemischer Verfahren wie einer Zinkphosphatierung ermöglichen.

Die zu Halbzeugen umgeformten Bandbleche werden für die Fertigung komplexerer Bauteile, beispielsweise Automobilkarosserien, oftmals auch durch Verkleben und Schweißen zusammengefügt. Auch gilt es je nach Anwendungsfeld, die gefügten Bauteile gegenüber Ein- bzw. Ausdringen von Flüssigkeiten abzudichten oder zur Schall- und Vibrationsdämpfung zu unterfüttern. Die mit dem Umformhilfsmittel ausgestatteten bzw. beschichteten Bandstahloberflächen sind jedoch nur bedingt geeignet, um zu Kleb- und Dichtstoffen eine ausreichende Adhäsion aufzubauen oder um das Schweißen zu ermöglichen.

Die japanische Offenlegungsschrift JR H11 1638 A beschreibt gemischt anorganischorganische Beschichtungssysteme für verzinkten und/oder aluminiertem Stahl basierend auf einer wässrigen Emulsionen von Acrylaten in Anwesenheit einer chrom-haltigen Verbindung zur Bereitstellung von vor Korrosion schützenden, optisch einwandfreien und überlackierbaren Passivierungen.

Die US 2008/199714 A offenbart ein Beschichtungssystem zur Passivierung von Stahlband mit Zink- oder Aluminiumbeschichtungen auf das Zusammensetzungen enthaltend Polycarboxylate und ein Wachs aufgebracht werden und das als Passivierung dem Stahlband eine gute Weiterverarbeitbarkeit verleiht.

Auch die US 2006/003901 A1 hat im Wesentlichen rein organische Beschichtungen auf Basis einer Mischung von Acrylaten zu Gegenstand, die als auf Metallsubstraten aufgetrockneter, temporärer Film eine schmierende Wirkung entfalten.

Es besteht daher weiterhin ein Bedarf, solche Umformhilfsmittel für die im Anwendungsfokus der Automobilindustrie stehenden mit metallischen Überzügen von Zink oder Aluminium versehenen Bandstähle zu entwickeln, die als Beschichtung auf derartigen Bandstählen nicht nur hervorragenden temporären Korrosionsschutz und ein mit der Vorphosphatierung von elektrolytisch verzinktem Bandstahl äquivalentes Umform- und Abriebverhalten beim Tiefziehen vermitteln, sondern zusätzlich das Verkleben oder Schweißen in den der Umformung typischerweise nachfolgenden Fertigungsstufen ohne zusätzlichen Reinigungsprozess ermöglichen und zudem eine hohe Verträglichkeit mit den dort zum Einsatz kommenden nasschemischen Vorbehandlungen, wie der dem Lackaufbau vorausgehenden korrosionsschützenden Konversionsbehandlung, aufweisen.

Diesem Aufgabenprofil bei der Umformung von beschichteten mit einem metallischen Zink- oder Aluminium Überzug versehenem Bandstahl werden überraschenderweise Beschichtungen gerecht, die durch Auftrocknen ("Dry-in-Place") von Wasser basierten, Polymere enthaltenden Zusammensetzungen, deren Trocknungsrückstand im Wesentlichen aus Polycarboxylaten besteht, erhältlich sind.

In einem ersten Aspekt betrifft die vorliegende Erfindung daher Bandstahl, der ein- oder beidseitig mit einem metallischen Zink- oder Aluminiumüberzug versehen ist, wobei der Überzug auf zumindest einer Seite eine Beschichtung aufweist, die im Wesentlichen aus mindestens einem Polycarboxylat besteht und in einer Schichtauflage an Kohlenstoff realisiert ist, die im Bereich von 10-100 mg/m² liegt, wobei der Anteil der Bestandteile der Beschichtung mit einer Molmasse oberhalb von 50.000 g/mol größer als 50 Gew.-% bezogen auf die Beschichtung ist.

Die auf dem mit einem metallischen Zink- oder Aluminiumüberzug versehenen Bandstahl erzielte Schichtauflage an Kohlenstoff wird mittels pyrolytischer Zersetzung bestimmt. Hierfür wird ein beschichteter Bandabschnitt definierter Fläche in einer Sauerstoffatmosphäre auf 550°C Substrattemperatur gebracht und die Menge des freigesetzten Kohlendioxids mittels Infrarot-Sensor quantitativ als Menge an Kohlenstoff erfasst, beispielsweise mittels des Analysegerätes LECO^{®} RC-412 Multiphase Carbon Determinator (Leco Corp.). In einer besonderen Ausführungsform liegt die Schichtauflage für eine ausreichend niedrige Gleitreibung beim Tiefziehen bei mindestens 20 mg Kohlenstoff pro m². Soll der zum Umformen beschichtete Bandstahl in nachfolgenden Fertigungsstufen einer korrosionsschützenden Konversionsbehandlung zugeführt werden, so ist bevorzugt, dass die Schichtauflage nicht größer als 60 mg Kohlenstoff pro m² beträgt.

Erfindungsgemäß liegt ein Zink- oder Aluminium-Überzug vor, wenn der metallische Überzug mindestens zu 50 At.-% aus dem jeweiligen Element zusammengesetzt ist und vorzugsweise in einer Schichtauflage bestimmt nach DIN EN 10346 : 2015 von mindestens 20 g/m², besonders bevorzugt von mindestens 40 g/m² aufgebracht ist, wobei als Legierungsbestandteile des metallischen Überzuges insbesondere Magnesium, Eisen und/oder Silizium in Frage kommen. Derartige Bandstahlsorten sind vorzugsweise elektrolytisch verzinkter Bandstahl sowie schmelztauchveredelte Bandstähle, die wiederum vorzugsweise mit Überzügen aus Aluminium-Silizium (AS), Aluminium-Zink (AZ), Zink (Z), Zink-Eisen (ZF), Zink-Aluminium (ZA) und Zink-Magnesium (ZM) ausgestattet sind. Für die Umformung durch Tiefziehen besonders geeignete mit metallischen Überzügen versehene Bandstähle - und daher für das erfindungsgemäße Verfahren besonders relevant und daher bevorzugt - sind elektrolytisch verzinkter oder schmelztauchveredelter Bandstahl mit einem Anteil von mindestens 50 At.-% an Zink im metallischen Überzug, besonders bevorzugt ein Überzug ausgewählt aus Zink (Z), Zink-Eisen (ZF), Zink-Aluminium (ZA) oder Zink-Magnesium (ZM).

Die Oberfläche des Bandstahls gilt im Sinne der vorliegenden Erfindung dann als "blank", wenn sie unmittelbar der Fertigungsstufe der Aufbringung des metallischen Überzuges, also der elektrolytischen Verzinkung oder Schmelztauchveredelung des Bandstahls, entstammt, wobei die Fertigungsstufe der Aufbringung des metallischen Überzuges auch ein nachgelagertes Dressieren bzw. Kaltnachwalzen und/oder Recken bzw. Streckbiegen des mit dem metallischen Überzug versehenen Bandstahls umfasst. Das Dressieren bzw. Kaltnachwalzen dient einerseits der Härtung und andererseits der Aufprägung einer Oberflächentextur für einen matten optischen Eindruck der Metalloberfläche. Das Dressieren bzw. Kaltnachwalzen erfolgt häufig unter Einsatz von mild-alkalischen Reinigern und endet sodann mit einer Spüle zur Entfernung von auf der Materialoberfläche anhaftenden Reinigerbestandteilen und Metallabrieb.

Die auf den metallischen Zink- oder Aluminiumüberzug des Bandstahls aufgebrachte Beschichtung besteht dann im Wesentlichen aus mindestens einem Polycarboxylat, wenn der Gesamtanteil der Polycarboxylate in der Beschichtung größer als 80 Gew.-% und vorzugsweise größer als 85 Gew.-%, besonders bevorzugt größer als 90 Gew.-%, insbesondere bevorzugt größer als 94 Gew.-%, jeweils bezogen auf die Masse der Schichtauflage ist.

Der Terminus "Polycarboxylat" im Kontext dieser Erfindung wird erfüllt durch organische Verbindungen, insbesondere Polymere oder Copolymere, die vorzugsweise eine gewichtsmittlere Molmasse von mehr als 1.000 g/mol besitzen, die eine Vielzahl an Carboxyl-Gruppen und vorzugsweise eine Säurezahl von mindestens 300 mg KOH pro Gramm, besonders bevorzugt von mindestens 400 mg KOH pro Gramm, insbesondere bevorzugt von mindestens 500 mg KOH pro Gramm des Polycarboxylates aufweisen.

Die Aufgabe der vorliegenden Erfindung, gute Umformeigenschaften bei niedrigen Metallabrieb während des Tiefziehens bereitzustellen, wird erfüllt wenn der Bestandteil der Beschichtung mit einer Molmasse oberhalb von 50.000 g/mol, vorzugsweise oberhalb von 100.000 g/mol, insbesondere bevorzugt oberhalb von 250.000 g/mol, mindestens 50 Gew.-%, vorzugsweise mindestens 70 Gew.-%, besonders bevorzugt mindestens 80 Gew.-% und insbesondere bevorzugt mindestens 90 Gew.-%, jeweils bezogen auf die Beschichtung beträgt. Die Molmasse wird dabei über die mit Größenausschlusschromatographie mit konzentrationsabhängigem Brechungsindex-Detektor bei 35 °C experimentell festgestellte und gegen Polymethacrylat(Natrium Salz)-Standards kalibrierte Molmassenverteilungskurve einer Probe der mit 10%iger Salzsäure in Lösung gebrachten Beschichtung unter Verwendung eines wässrigen Eluates bestimmt, wobei auf den sogenannten Mₚ-Wert (Peak Molecular Weight) des jeweiligen Standards kalibriert wird. Die Auswertung der Molmassenmittelwerte erfolgt rechnergestützt nach der Streifenmethode mit einem Polynom der 4. Ordnung. Als Säulenmaterial eignet sich hydroxyliertes Polymethacrylat sowie als Eluent eine wässrige Lösung aus 0,2 mol/L Natriumchlorid, 0,02 mol/L Natriumhydroxid, 6,5 mmol/L Ammoniumhydroxyd.

Der erfindungsgemäße Bandstahl ist in einer bevorzugten Ausführungsform dadurch erhältlich, insbesondere dadurch hergestellt, dass auf die blanke Oberfläche zumindest einer Seite des Bandstahls, die mit einem metallischen Zink- oder Aluminiumüberzug versehen ist, ein Nassfilm einer Wasser basierten, organische Polymere enthaltenden Zusammensetzung aufgebracht und eingetrocknet wird, wobei der Trocknungsrückstand der Wasser basierten, organische Polymere enthaltenden Zusammensetzung im Wesentlichen aus mindestens einem Polycarboxylat besteht. Die für die Beschichtung des erfindungsgemäßen Bandstahls zu verwendende Wasser basierte, organische Polymere enthaltende Zusammensetzung wird im Folgenden entsprechend ihrer Verwendung und Wirkweise als "Umformbeschichtungsmittel" bezeichnet.

Der Trocknungsrückstand des Umformbeschichtungsmittels besteht im Rahmen des ersten Aspekts der vorliegenden Erfindung dann im Wesentlichen aus mindestens einem Polycarboxylat, wenn der Gesamtanteil der Polycarboxylate im Trocknungsrückstand des Umformbeschichtungsmittels größer ist als 80 Gew.-%, vorzugsweise größer ist als 85 Gew.-%, besonders bevorzugt größer ist als 90 Gew.-%, insbesondere bevorzugt größer ist als 94 Gew.-% jeweils bezogen auf den Trocknungsrückstand ist. Der Trocknungsrückstand ist im Rahmen der vorliegenden Erfindung, der nach Aufheizen einer Probe des Umformbeschichtungsmittels auf 150°C in Stickstoffatmosphäre für eine Dauer bis zum Erreichen der Massenkonstanz verbleibende Feststoffanteil der Probe. Über diesen erfindungsgemäß hohen Anteil an Polycarboxylaten werden Beschichtungen erzeugt, die als solche ein Verkleben mit in der Teilefertigung üblichen Kleb- und Dichtstoffen erlauben und dabei eine gute Adhäsion gewährleisten. Ferner hat sich herausgestellt, dass derartige Beschichtungen mit in den bei den Abnehmern von Bandstahl regelmäßig zum Einsatz kommenden Verfahren zu korrosionsschützenden Metallbehandlung kompatibel sind und beispielsweise problemlos einer alkalischen Reinigung und nachfolgenden Phosphatierung oder chromfreien Konversionsbehandlung, insbesondere auf Basis fluoridhaltiger saurer Zusammensetzungen enthaltend Elemente der Gruppen IVB - VIB des Periodensystems, ohne Einbuße an Performanz zugeführt werden können.

Der in diesem Herstellverfahren für den erfindungsgemäßen Bandstahl aufgebrachte Nassfilm ist der auf der Bandstahloberfläche aufgebrachte Film der Wasser basierten, organische Polymere enthaltenden Zusammensetzung (= Umformbeschichtungsmittel), wobei die Zusammensetzung dann als wasserbasiert gilt, wenn der Anteil an Wasser im flüchtigen Bestandteil des Umformbeschichtungsmittel, also demjenigen Teil, der nicht Trocknungsrückstand ist, mindestens 80 Gew.-% ist.

Das Umformbeschichtungsmittel gilt im Kontext der vorliegenden Erfindung als ein organisches Polymer enthaltend, wenn es einen Feststoffanteil mit einer Molmasse oberhalb von 1.000 g/mol aufweist. Die Molmasse wird dabei analog zur bereits im Zusammenhang mit der Beschichtung beschriebenen Meßmethodik über die mit Größenausschlußchromatographie mit konzentrationsabhängigem Brechungsindex-Detektor bei 35 °C experimentell festgestellte und gegen Polymethacrylat (Natrium Salz)-Standards kalibrierte Molmassenverteilungskurve einer Probe des Umformbeschichtungsmittels unter Verwendung eines wässrigen Eluates bestimmt, wobei auf den sogenannten Mₚ-Wert (Peak Molecular Weight) des jeweiligen Standards kalibriert wird. Die Auswertung der Molmassenmittelwerte erfolgt rechnergestützt nach der Streifenmethode mit einem Polynom der 4. Ordnung. Als Säulenmaterial eignet sich hydroxyliertes Polymethacrylat sowie als Eluent eine wässrige Lösung aus 0,2 mol/L Natriumchlorid, 0,02 mol/L Natriumhydroxid, 6,5 mmol/L Ammoniumhydroxyd. Enthält der Trocknungsrückstand des Eluats der Größenausschlusschromatographie, dem eine Molmasse oberhalb 1.000 g/mol aufgrund der zuvor beschriebenen Meßmethodik zugewiesen wird, einen Kohlenstoffanteil, der oberhalb des für den Eluenten und für das Säulenmaterial spezifischen Kohlenstoffgehaltes liegt, so enthält das Umformbeschichtungsmittel ein organisches Polymer im Sinne der vorliegenden Erfindung.

Besonders vorteilhaft für die Bereitstellung von erfindungsgemäßen Bandstahl mit guten Umformeigenschaften, also niedriger Gleitreibung und damit niedrigen Metallabrieb während des Tiefziehens, sind Umformbeschichtungsmittel deren Feststoffanteil mit einer Molmasse oberhalb von 50.000 g/mol, besonders bevorzugt oberhalb von 100.000 g/mol, insbesondere bevorzugt oberhalb von 250.000 g/mol, mindestens 50 Gew.-%, vorzugsweise mindestens 70 Gew.-%, besonders bevorzugt mindestens 80 Gew.-% und insbesondere bevorzugt mindestens 90 Gew.-%, jeweils bezogen auf den Trocknungsrückstand beträgt. In diesem Zusammenhang besonders bevorzugt sind Umformbeschichtungsmittel, die ein oder mehrere Polycarboxylate enthalten, deren gewichtsmittlere Molekülmasse jeweils mindestens 100.000 g/mol, vorzugsweise mindestens 250.000 g/mol, besonders bevorzugt mindestens 500.000 g/mol, und insbesondere bevorzugt mindestens 1.000.000 g/mol jeweils bestimmt mittels Größenauschlusschromatographie entsprechend der zuvor beschrieben Meßmethodik.

Auch im Zusammenhang mit dem Umformbeschichtungsmittel zur Bereitstellung des erfindungsgemäßen Bandstahls umfasst der Terminus "Polycarboxylat" im Kontext dieser Erfindung organische Verbindungen, insbesondere Polymere oder Copolymere, die vorzugsweise eine gewichtsmittlere Molmasse von mehr als 1.000 g/mol besitzen, die eine Vielzahl an Carboxyl-Gruppen und vorzugsweise eine Säurezahl von mindestens 300 mg KOH pro Gramm, besonders bevorzugt von mindestens 400 mg KOH pro Gramm, insbesondere bevorzugt von mindestens 500 mg KOH pro Gramm des Polycarboxylats aufweisen, wobei in einer bevorzugten Ausführungsform der Trocknungsrückstand des Umformbeschichtungsmittels die zuvor genannten Säurezahlen aufweist. Die Säurezahl ist eine experimentell zu bestimmende Kennzahl, die ein Maß für die Anzahl der freien Säuregruppen der verwendeten Polycarboxylate bzw. im Trocknungsrückstand ist. Die Säurezahl wird bestimmt, indem eine eingewogene Menge des Polycarboxylats bzw. des Trocknungsrückstandes in einem Lösemittelgemisch aus Methanol und destilliertem Wasser im Volumenverhältnis 3 : 1 gelöst und anschließend mit 0,05 mol/l KOH in Methanol potentiometrisch titriert wird. Die potentiometrische Messung erfolgt mit einer Einstabmesskette (LL-Solvotrode^{®} der Fa. Metrohm; Bezugselektrolyt: 0,4 mol/l Tetraethylammoniumbromid in Ethylenglykol). Die Säurezahl entspricht dabei der hinzugesetzten Menge an KOH in Milligramm pro Gramm des Polycarboxylates bzw. des Trocknungsrückstandes im Wendepunkt der potentiometrischen Titrationskurve.

Es hat sich herausgestellt, dass Polycarboxylate, die zumindest teilweise aus α,β-ungesättigten Carbonsäuren zusammengesetzt sind, in Verfahren zur Bereitstellung des erfindungsgemäßen Bandstahls Beschichtungen mit besonders guten Gleitreibungseigenschaften ausbilden, die zudem in nachfolgenden nasschemischen Prozessschritten zur korrosionsschützenden Konversionsbehandlung leicht von der Oberfläche entfernt werden und zugleich gewährleisten, dass eine gute Adhäsion zu Kleb- und Dichtstoffen hergestellt ist. Dementsprechend bevorzugt sind in dem Umformbeschichtungsmittel zur Bereitstellung des erfindungsgemäßen Bandstahls solche Polycarboxylate enthalten, die Polymere oder Copolymere, vorzugsweise Polymere, von α,β-ungesättigten Carbonsäuren, die wiederum vorzugsweise ausgewählt sind aus Zimtsäure, Crotonsäure, Fumarsäure, Itaconsäure, Maleinsäure, Acrylsäure und/oder Methacrylsäure, besonders bevorzugt aus Maleinsäure, Acrylsäure und/oder Methacrylsäure, insbesondere bevorzugt aus Acrylsäure und/oder Methacrylsäure, darstellen. Geeignete Comonomere sind beispielsweise aliphatische und acyclische Alkene und vorzugsweise ausgewählt aus Ethen, Propen, 1-Buten, 2-Buten, Isobuten, 1,3-Butadien und/oder 2-Methylbuta-1,3-dien, besonders bevorzugt Ethen. Weiterhin ist in diesem Kontext bevorzugt, wenn der Anteil an Maleinsäure-, Acrylsäure- und Methacrylsäure-Bausteinen insgesamt mindestens 50 Gew.-%, besonders bevorzugt insgesamt mindestens 70 Gew.-%, insbesondere bevorzugt insgesamt mindestens 90 Gew.-% jeweils bezogen auf die Gesamtheit der Polycarboxylate im Umformbeschichtungsmittel beträgt.

Die Anwesenheit anderer Säuregruppen, die keine Carboxylat-Gruppen darstellen, sei es im Polycarboxylat oder allgemein im polymeren Bestandteil des Umformhilfsmittels ist für die Erzielung einer guten Umformbarkeit nicht erforderlich. Vielmehr scheint für gute Gleiteigenschaften der Beschichtung bedeutend, dass die im Umformhilfsmittel enthaltenden Polycarboxylate strukturell möglichst homogen aufgebaut sind. Insofern ist bevorzugt, dass der Anteil an Phosphonsäure- und/oder Phosphorsäure-Gruppen sowie deren Ester, vorzugsweise der Anteil der Elemente Stickstoff, Phosphor und/oder Schwefel, im polymeren Bestandteil der Wasser basierten, organische Polymere enthaltenden Zusammensetzung insgesamt kleiner als 1 mmol, vorzugsweise kleiner als 0,5 mmol, besonders bevorzugt kleiner als 0,1 mmol, jeweils pro Gramm des Trocknungsrückstandes ist.

Die Beschichtung des Bandstahls muss keine korrosionsschützende Konversion der Metalloberfläche herbeiführen, in deren Verlauf eine Passivschicht auf Basis von in Wasser schwerlöslichen anorganischen Salzen ausgebildet wird. Dementsprechend ist es vorteilhaft, wenn das Umformbeschichtungsmittel zur Bereitstellung des erfindungsgemäßen, beschichteten Bandstahls jeweils weniger als 10 mg/kg, besonders bevorzugt jeweils weniger als 1 mg/kg bezogen auf das jeweilige Element und das Umformbeschichtungsmittel an wasserlöslichen Verbindungen enthaltend Elemente der Gruppen I B, III B - VIII B des Periodensystems enthält. Aus denselben Erwägungsgründen sind Umformbeschichtungsmittel für die Bereitstellung des erfindungsgemäßen, beschichteten Bandstahls bevorzugt die weniger als 1 g/kg, besonders bevorzugt weniger als 0,1 g/kg, besonders bevorzugt weniger als 0,01 g/kg an wasserlöslichen Phosphaten enthalten.

Jedoch kann es im Einzelfall vorteilhaft sein, wenn die Beschichtung sogenannte Tracer-Elemente enthält, die mittels energiedispersiver Röntgenspektroskopie (REM-EDX) leicht in dünnen Schichten nachweisbar sind und aus deren Verteilung auf der Oberfläche des Bandstahls Rückschlüsse auf die Homogenität der Beschichtung gemacht werden können. Hierfür sind Elemente der Erdalkalimetalle gut geeignete Tracer, die in einer bevorzugten Ausführungsform zum Umformbeschichtungsmittel für die Bereitstellung des erfindungsgemäßen, beschichteten Bandstahls additiviert werden können, vorzugsweise in einer Menge von zumindest 0,001 g/kg, besonders bevorzugt in einer Menge von 0,01 g/kg, jeweils berechnet als Menge des jeweiligen Erdalkali-Elements und bezogen auf das Umformbeschichtungsmittel. Es gilt jedoch in diesem Zusammenhang, dass die Stabilität des Umformbeschichtungsmittels bei einer Additivierung von Erdalkalimetall-Kationen gewährleistet bleiben muss und die Bildung von in Wasser dispergierten Agglomeraten für die Ausbildung homogener Beschichtungen weitestgehend unterbunden werden soll. Insofern hat es generell als vorteilhaft herausgestellt, dass der Anteil an wasserlöslichen Verbindungen enthaltend Elemente der Erdalkalimetalle kleiner als 10 Gew.-%, vorzugsweise kleiner als 8 Gew.-%, besonders bevorzugt kleiner als 6 Gew-%, jeweils berechnet als Anteil des Erdalkalielements bezogen auf den Trockenrückstand des Umformbeschichtungsmittels für die Bereitstellung des erfindungsgemäßen, beschichteten Bandstahls ist. Kann auf die Anwesenheit von anorganischen Tracer-Elementen in der Beschichtung des erfindungsgemäßen Bandstahls verzichtet werden, ist es bevorzugt, wenn der Anteil an polyvalenten Metall-Kationen im Umformbeschichtungsmittels für die Bereitstellung des erfindungsgemäßen, beschichteten Bandstahls jeweils kleiner als 0,1 g/kg, besonders bevorzugt kleiner als 0,01 g/kg, insbesondere bevorzugt kleiner als 0,001 g/kg, jeweils berechnet als Menge des entsprechenden Erdalkali-Elements und bezogen auf das Umformbeschichtungsmittel für die Bereitstellung des erfindungsgemäßen, beschichteten Bandstahls.

Für die Bereitstellung des erfindungsgemäßen, beschichteten Bandstahls ist das Umformbeschichtungsmittel dann besonders gut geeignet für die Schichtbildung durch Auftrocknen, wenn die enthaltenen Polycarboxylate in Wasser gelöst vorliegen. Insofern ist es bevorzugt, wenn der pH-Wert des Umformbeschichtungsmittels nicht kleiner als 1,5 besonders bevorzugt nicht kleiner als 2,0 ist, jedoch vorzugsweise den Wert 5,0, besonders bevorzugt den Wert 4,0 nicht überschreitet. Zur Einstellung des pH-Wertes wird dem Umformbeschichtungsmittel vorzugsweise eine pH-regulierende Verbindung hinzugegeben, die wiederum vorzugsweise ausgewählt ist aus Salpetersäure, Phosphorsäure, Schwefelsäure und/oder solchen organischen Säuren, die zugleich komplexierende Eigenschaften aufweisen und die Stabilität des Umformbeschichtungsmittels in Gegenwart polyvalenter Metall-Kationen deutlich erhöhen. Derartige organische Säuren sind vorzugsweise ausgewählt aus organischen Phosphonsäuren, α-Hydroxycarbonsäuren und/oder Dicarbonsäuren jeweils mit nicht mehr als 10 Kohlenstoffatomen, besonders bevorzugt ausgewählt aus 1-Hydroxyethan-(1,1-diphosphonsäure), Aminotrimethylenphosphonsäure, Ethylendiamintetra(methylen-phosphonsäure), Diethylentriaminpenta(methylenphosphonsäure), Ethylendiamintetraessigsäure, Nitrilotriessigsäure, Zitronensäure, Weinsäure und/oder Gluconsäure.

Nach dem Aufbringen des Nassfilms des Umformbeschichtungsmittels erfolgt das Auftrocknen desselben zur Ausbildung der die Umformung verbessernden Beschichtung. Diese Trocknung wird vorzugsweise durch Aufheizen des Bandstahls auf eine Spitzentemperatur (sogenannte PMT bzw. "Peak-Metal-Temperature") von zumindest 40 °C, besonders bevorzugt von zumindest 60 °C, jedoch vorzugsweise von nicht mehr als 150 °C, besonders bevorzugt von nicht mehr als 120 °C herbeigeführt. Das Trocknen kann durch Aufprägen einer Luftströmung zusätzlich unterstützt und beschleunigt werden.

Der beschichte Bandstahl kann gemäß dem ersten Aspekt der vorliegenden Erfindung zusätzlich mit einer Ölauflage versehen werden, um die Korrosionsanfälligkeit und die Bildung von Korrosionsprodukten bei Transport und Lagerung, insbesondere in aufgerollter Form, zu reduzieren. Häufig wirkt sich eine Beölung auch positiv auf das Umformverhalten des Bandstahls in nachgelagerten Fertigungsstufen aus. Die Ölschicht sollte jedenfalls so ausgewählt sein, dass sie mit milden, nicht die Oberfläche angreifenden Reinigern entfernt werden kann, beispielsweise im Zuge einer korrosionsschützenden Metallbehandlung.

In einem zweiten Aspekt betrifft die vorliegende Erfindung ein Umformverfahren unter Verwendung des gemäß dem ersten Aspekt dieser Erfindung beschichteten Bandstahls. Umfasst ist demnach ein Umformverfahren, bei dem beschichteter Bandstahl gemäß dem ersten Aspekt dieser Erfindung ggf. zusätzlich beölt und anschließend tiefgezogen wird. Das Tiefziehen ist eine spezielle Ausgestaltung eines Umformprozesses und umfasst das Zugdruckumformen eines Flacherzeugnisses zu einem einseitig offenen Hohlkörper unter Verwendung eines starren Werkzeuges. Der beschichtete Bandstahl nach dem ersten Aspekt der vorliegenden Erfindung wird dazu vorzugsweise vor dem Tiefziehen, jedoch nach einer optionalen Beölung, zugeschnitten und vorzugsweise Zuschnitte ausgewählt aus Ronden, Tafeln, Platten oder Platinen erstellt.

Das Umformverfahren durch Tiefziehen gemäß dem zweiten Aspekt der vorliegenden Erfindung erfolgt also mit einem Formwerkzeug durch Pressen und vorzugsweise derart, dass das Anpressen des Formwerkzeuges auf der die Beschichtung aufweisenden Seite des Bandstahls erfolgt.

Die gemäß dem Umformverfahren tiefgezogenen beschichteten Bandstahlzuschnitte werden sodann in nachfolgenden Fertigungsstufen zu Bauteilen weiterverarbeitet, und dabei insbesondere durch Schweißen, Kleben und Dichten mit anderen Bauteilen problemlos verbunden. Dementsprechend betrifft die Erfindung im Rahmen ihres zweiten Aspekts auch ein Bauteil bestehend aus mindestens einem gemäß dem zweiten Aspekt der vorliegenden Erfindung umgeformten Bandstahlzuschnitt, der vorzugsweise ausgewählt ist aus Automobilkarosserieteilen, Wärmetauschern, weißer Ware, Profilen, Rohren, Dosen, Tanks oder Wannen. Diese Bauteile können aufgrund der Art der im ersten Aspekt der vorliegenden Erfindung bereitgestellten Beschichtung unmittelbar den üblichen nasschemischen Prozessschritten zur korrosionsschützenden Metallbehandlung umfassend Reinigung, Konversionsschichtbildung und ggf. Lackierung, insbesondere kathodische Elektrotauchlackierung, zugeführt werden.

Ausführungsbeispiele:
Es wurden Blechabschnitte (50 × 400 mm) von feuerverzinktem Bandstahl (DX56+Z140MC) mit Polyacrylaten beschichtet und dafür eine solche Nassfilmauflage der in der Tabelle 1 gelisteten Rezepturen aufgebracht, die nach dem Eintrocknen bei 50°C im Trockenschrank eine Schichtauflage an Kohlenstoff von 25 ± 4 mg/m² aufwiesen. Die Schichtauflage an Kohlenstoff wurde mittels Multiphase Carbon Determinator RC-412 (Leco Corp.) bei einer Verbrennungstemperatur im Sauerstoffstrom von bis zu 550°C (PMT, Peak-Metal-Temperature) bestimmt.

| Tab. 1 | | | |
|---|---|---|---|
| Polyacrylsäure- Rezepturen | | | |
| | | Polyacrylsäure | |
| Rezeptur | | Molmasse¹ g/mol | Menge² in g/kg |
| V1 | | 5.000 | 25 |
| E1 | | 100.000 | 26 |
| E2 | | 250.000 | 26 |
| E3 | | 5.000.000 | 25 |
| 1 | aus mittels GPC (RI-Detektor bei 35°C) erfasster und auf den Mp-Wert von Polymethacrylat (Na Salz)-Standards kalibrierter Molmassenverteilungskurve, die mit Polynom 4.Ordnung gefittet und mittels Streifenmethode quantitativ ausgewertet wurde | | |
| 2 | als Trocknungsrückstand bis zur Massenkonstanz bei 150°C im Trockenschrank | | |

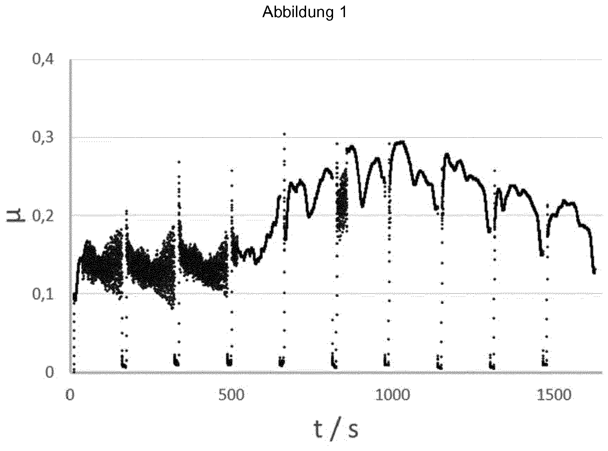

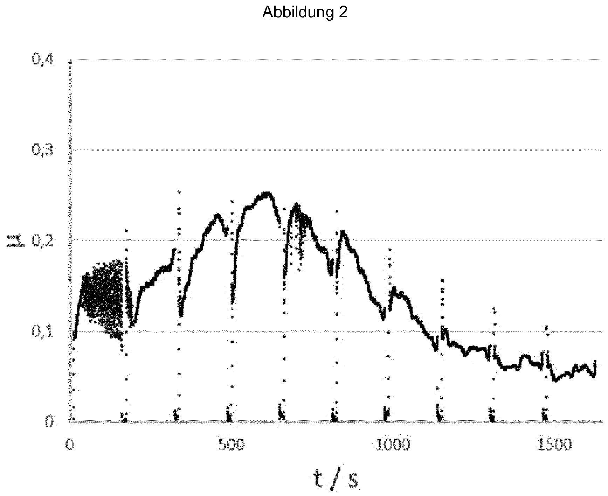

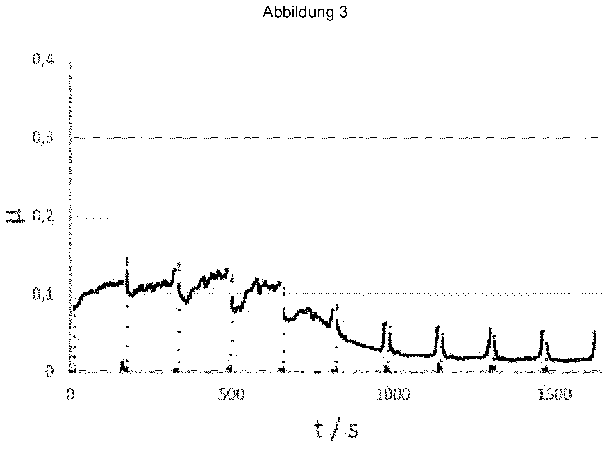

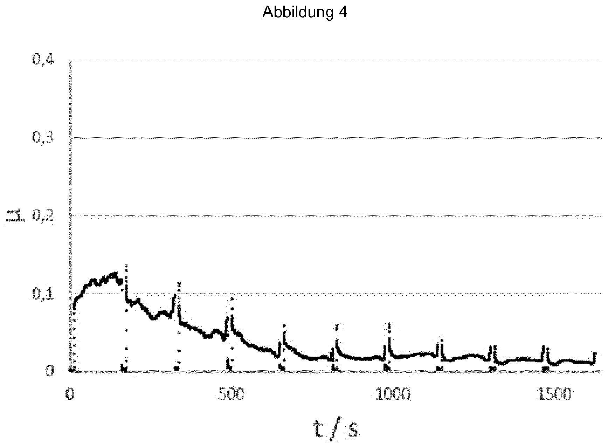

Die derart beschichteten Blechabschnitte wurden sodann im Streifenzugtest vermessen. Dazu wurden die beschichteten Blechabschnitte zwischen zwei flächigen Metallbacken eingespannt und unter konstanter Krafteinwirkung in Einspannrichtung aus der Einspannung durch die Metallbacken eine definierte Strecke herausbewegt und die dafür benötigte Kraft in Abhängigkeit von der Zeit gemessen. Nachdem der Blechabschnitt die definierte Strecke aus der Einspannung herausbewegt wurde, wurde der Streifenzugtest an derselben Stelle des Blechabschnittes untergleichen Bedingungen wiederholt und insgesamt zehnmal durchgeführt. In den Abbildungen 1-5 sind die entsprechenden Kurven wiedergegeben. Die Abbildung 1 gibt den im Streifenzugtest auf dem unbeschichteten Substrat wieder und die Abbildungen 2-5, die mit den Rezepturen V1 und E1-E3 gemäß der Tabelle 1 beschichteten Blechabschnitte. In Abbildung 1 zeigt sich - gut erkennbar bei in etwa 750, 900 und 1050 Sekunden - während des jeweiligen Streifenzugs das Phänomen des sogenannten "Stick-Slips", d.h. das das Herausbewegen des Blechstreifens ruckartig erfolgt. Dieses Verhalten gilt es zu eliminieren, da es beim Tiefziehen einen erhöhten Metallabrieb und eine erhöhte Beanspruchung des Tiefziehwerkzeuges verursacht.

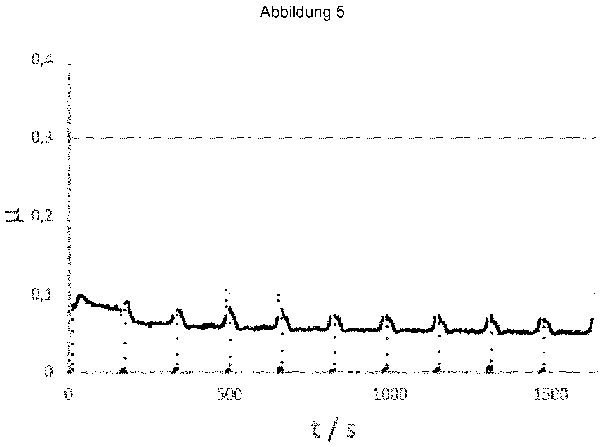

Es wird deutlich, dass mit der Rezeptur V1 der "Stick-Slip" zwar bereits deutlich eliminiert wird, jedoch erst durch die Wiederholung des Streifenzugtests ein niedriger Gleitreibungskoeffizient im Bereich von 0,1 an der beanspruchten Stelle des Bleches erzielt wird. Erst der mit der Rezeptur E1 beschichtete Blechabschnitt liefert zufriedenstellende "Stick-Slip" Eigenschaften bei über jedem Streifenzug ausreichend niedrigem Gleitreibungskoeffizienten. Der Einsatz höhermolekularer Polyacrylate bewirkt dann einen insgesamt niedrigeren Gleitreibungskoeffizienten im Bereich von 0,05 und dies im Falle des mit der Rezeptur E3 beschichteten Blechstreifens bereits beim ersten Streifenzug, der das erste Tiefziehen und Vorformen eines Bandabschnittes auf dem Weg zum fertig umgeformten Bauteil simuliert (siehe Abbildung 5 zum mit der Rezeptur E4 beschichteten Blechabschnitt).

Die Verklebbarkeit von mit der Rezeptur E3 beschichteten Blechabschnitten mit handelsüblichen Industrieklebstoffen wurde ebenfalls bestimmt. Die Ergebnisse hierzu sind in der Tabelle 2 sowie in Abbildung 1 zusammengefasst und zeigen zum einen, dass die Verklebbarkeit grundsätzlich gegeben ist, und zum anderen, dass die Verklebung beschichteter Blechabschnitte nach Auslagerung in einer korrosiven Umgebung eine gegenüber unbeschichteten Blechabschnitten verbesserte Adhäsion aufweist.

| Tab. 2 | | | | | |
|---|---|---|---|---|---|
| Zug-Scher-Beanspruchung in MPa nach dem Verkleben jeweils vor und nach einer Auslagerung in Salzwasser | | | | | |
| Teroson^{®} | | Verklebbarkeit¹ | | | |
| | | beschichtet (E3) | | Unbeschichtet | |
| | | Salzwasserauslagerung² 21 Tage bei 70°C | | | |
| | | vor | Nach | vor | Nach |
| EP8026 | | 16,3 | 11,5 | 16,6 | 9,3 |
| EP5090 | | 20,0 | 15,5 | 17,5 | 7,1 |
| RB3208 | | 0,4 | 0,4 | 0,4 | 0,2 |
| ^{®} 1 | Produktreihe der Henkel AG & Co.KGaA Die Präparation der Prüfkörper, deren Verklebung und die Bestimmung der Zug-Scher-Beanspruchung erfolgte nach DIN EN 1465:2009 | | | | |
| 2 | Auslagerung erfolgte in 5 Gew.-%iger NaCl-Lösung durch Eintauchen | | | | |

Die Phosphatierbarkeit (Reinigung mit Bonderite^{®} C-AK 11566-1 im Tauchen bei 60°C für 3 Minuten; Phosphatierung mit Bonderite^{®} M-ZN 2798 bei 50°C für 3 Minuten; Nachspüle mit Bonderite^{®} M-PT 54 NC bei 40°C für 1 Minute jeweils Produkte der Henkel AG & Co. KGaA) war in allen Fällen gegeben und es wurden deckende, homogene Zinkphosphatüberzüge erhalten.

## Patentansprüche

1. Bandstahl, der ein- oder beidseitig mit einem metallischen Zink- oder Aluminiumüberzug versehen ist, wobei der Überzug auf zumindest einer Seite eine Beschichtung aufweist, die im Wesentlichen aus mindestens einem Polycarboxylat besteht und in einer Schichtauflage an Kohlenstoff (gemessen nach der Methode in der Beschreibung) realisiert ist, die im Bereich von 10-100 mg/m² liegt, wobei der Anteil der Bestandteile der Beschichtung mit einer Molmasse (gemessen nach der Methode in der Beschreibung) oberhalb von 50.000 g/mol größer als 50 Gew.-% bezogen auf die Beschichtung ist.

2. Bandstahl nach Anspruch 1, **dadurch gekennzeichnet, dass** der Bandstahl beidseitig elektrolytisch verzinkt oder schmelztauchveredelt ist, vorzugsweise schmelztauchverzinkt.

3. Bandstahl nach einem oder beiden der vorherigen Ansprüche erhältlich in einem Verfahren, bei dem auf die blanke Oberfläche zumindest einer Seite des Bandstahls, die mit einem metallischen Zink- oder Aluminiumüberzug versehen ist, ein Nassfilm einer Wasser basierten, organische Polymere enthaltenden Zusammensetzung aufgebracht und eingetrocknet wird, wobei der Trocknungsrückstand der Wasser basierten Zusammensetzung im Wesentlichen aus mindestens einem Polycarboxylat besteht.

4. Bandstahl nach Anspruch 3, **dadurch gekennzeichnet, dass** der Anteil der Bestandteile in der Wasser basierten, organische Polymere enthaltenden Zusammensetzung mit einer Molmasse oberhalb von 50.000 g/mol, vorzugsweise oberhalb von 100.000 g/mol, besonders bevorzugt oberhalb von 250.000 g/mol, bezogen auf den Trocknungsrückstand mindestens 50 Gew.-%, vorzugsweise mindestens 70 Gew.-%, besonders bevorzugt mindestes 80 Gew.-% und insbesondere bevorzugt mindestens 90 Gew.-% ist.

5. Bandstahl nach einem oder beiden der Ansprüche 3 und 4, **dadurch gekennzeichnet, dass** die Wasser basierte, organische Polymere enthaltende Zusammensetzung ein oder mehrere Polycarboxylate enthält, deren gewichtsmittlere Molekülmasse jeweils mindestens 100.000 g/mol, vorzugsweise mindestens 250.000 g/mol, besonders bevorzugt mindestens 500.000 g/mol und insbesondere bevorzugt mindestens 1.000.000 g/mol ist.

6. Bandstahl nach einem oder mehreren der vorherigen Ansprüche 3 - 5, **dadurch gekennzeichnet, dass** der Anteil an Polycarboxylaten in der Wasser basierten, organische Polymere enthaltenden Zusammensetzung größer als 85 Gew.-%, vorzugsweise größer als 90 Gew.-%, besonders bevorzugt größer als 94 Gew.-% bezogen auf den Trocknungsrückstand ist.

7. Bandstahl nach einem oder mehreren der vorherigen Ansprüche 3 - 6, **dadurch gekennzeichnet, dass** die Wasser basierte, organische Polymere enthaltende Zusammensetzung solche Polycarboxylate enthält, die Polymere oder Copolymere, vorzugsweise Polymere, von α,β-ungesättigten Carbonsäuren, vorzugsweise ausgewählt aus Zimtsäure, Crotonsäure, Fumarsäure, Itaconsäure, Maleinsäure, Acrylsäure und/oder Methacrylsäure, besonders bevorzugt aus Maleinsäure, Acrylsäure und/oder Methacrylsäure, insbesondere bevorzugt aus Acrylsäure und/oder Methacrylsäure, darstellen.

8. Bandstahl nach einem oder mehreren der vorherigen Ansprüche 3 - 7, **dadurch gekennzeichnet, dass** die Wasser basierte, organische Polymere enthaltende Zusammensetzung eine Säurezahl (gemessen nach der Methode in der Beschreibung) von mindestens 300 mg KOH pro Gramm, vorzugsweise mindestens 400 mg KOH pro Gramm, besonders bevorzugt mindestens 500 mg KOH pro Gramm des Trocknungsrückstandes aufweist.

9. Bandstahl nach einem oder mehreren der vorherigen Ansprüche 3 - 8, **dadurch gekennzeichnet, dass** der Anteil an Phosphonsäure- und/oder Phosphorsäure-Gruppen sowie deren Ester im polymeren Bestandteil der Wasser basierten, organische Polymere enthaltenden Zusammensetzung insgesamt kleiner als 1 mmol, vorzugsweise kleiner als 0,5 mmol, besonders bevorzugt kleiner als 0,1 mmol, jeweils pro Gramm des Trocknungsrückstandes ist.

10. Bandstahl nach einem oder mehreren der vorherigen Ansprüche 3 - 9, **dadurch gekennzeichnet, dass** der Anteil an wasserlöslichen Verbindungen enthaltend Elemente der Gruppen I B, III B - VIII B des Periodensystems jeweils geringer als 10 mg/kg, vorzugsweise jeweils geringer als 1 mg/kg bezogen auf das jeweilige Element und die Wasser basierte Zusammensetzung ist.

11. Bandstahl nach einem oder mehreren der vorherigen Ansprüche 3 - 10, **dadurch gekennzeichnet, dass** der Anteil an wasserlöslichen Verbindungen enthaltend Elemente der Erdalkalimetalle bezogen auf den Trockenrückstand der Wasser basierten Zusammensetzung kleiner als 10 Gew.-%, vorzugsweise kleiner als 8 Gew.-%, besonders bevorzugt kleiner als 6 Gew-% ist.

12. Bandstahl nach einem oder mehreren der vorherigen Ansprüche 3 - 11, **dadurch gekennzeichnet, dass** die Wasser basierte Zusammensetzung zusätzlich eine pH-regulierende Verbindung enthält, die vorzugsweise ausgewählt ist aus organischen Phosphonsäuren, α-Hydroxycarbonsäuren und/oder Dicarbonsäuren jeweils mit nicht mehr als 6 Kohlenstoffatomen, Salpetersäure, Phosphorsäure und/oder Schwefelsäure, besonders bevorzugt aus Salpetersäure und/oder Schwefelsäure.

13. Bandstahl nach einem oder mehreren der vorherigen Ansprüche 3 - 12, **dadurch gekennzeichnet, dass** der pH-Wert der Wasser basierten Zusammensetzung nicht kleiner als 1,5 vorzugsweise nicht kleiner als 2,0 ist, jedoch vorzugsweise den Wert 5,0, besonders bevorzugt den Wert 4,0 nicht überschreitet.

14. Umformverfahren, bei dem Bandstahl nach einem oder mehreren der vorherigen Ansprüche 1 - 13 ggf. zusätzlich beölt und anschließend tiefgezogen wird und vorzugsweise vor dem Tiefziehen, jedoch nach einer Beölung, Zuschnitte, vorzugsweise ausgewählt aus Ronden, Tafeln, Platten oder Platinen, abgetrennt werden.

15. Bauteil bestehend aus mindestens einem gemäß Anspruch 14 umgeformten Bandstahlzuschnitt vorzugsweise ausgewählt aus Automobilkarosserieteilen, Wärmetauschern, weißer Ware, Profilen, Rohren, Dosen, Tanks oder Wannen.

## Claims

1. A steel strip which is provided with a metallic zinc or aluminum coating on one or both sides, wherein the coating has a coat on at least one side which substantially consists of at least one polycarboxylate and is produced in a layer deposit of carbon (measured according to the method in the description), which deposit is in the range of 10-100 mg/m², wherein the content of the components of the coat having a molar mass (measured according to the method in the description) above 50,000 g/mol is greater than 50 wt.% relative to the coat.

2. The steel strip according to claim 1, **characterized in that** the steel strip is electrolytically galvanized or hot-dip coated on both sides, preferably hot-dip galvanized.

3. The steel strip according to one or both of the preceding claims obtainable in a method in which a wet film of a water-based, organic-polymer-containing composition is applied or dried on the bare surface of at least one side of the steel strip which is provided with a metallic zinc or aluminum coating, wherein the drying residue of the water-based composition consists substantially of at least one polycarboxylate.

4. The steel strip according to claim 3, **characterized in that** the content of the components in the water-based, organic-polymer-containing composition having a molar mass above 50,000 g/mol, preferably above 100,000 g/mol, particularly preferably above 250,000 g/mol, is at least 50 wt.%, preferably at least 70 wt.%, particularly preferably at least 80 wt.% and very particularly preferably at least 90 wt.%, relative to the drying residue.

5. The steel strip according to one or both of claims 3 and 4, **characterized in that** the water-based, organic-polymer-containing composition contains one or more polycarboxylates, the weight-average molecular mass of which is in each case at least 100,000 g/mol, preferably at least 250,000 g/mol, particularly preferably at least 500,000 g/mol and very particularly preferably at least 1,000,000 g/mol.

6. The steel strip according to one or more of the preceding claims 3 to 5, **characterized in that** the content of polycarboxylates in the water-based, organic-polymer-containing composition is greater than 85 wt.%, preferably greater than 90 wt.%, particularly preferably greater than 94 wt.%, relative to the drying residue.

7. The steel strip according to one or more of the preceding claims 3 to 6, **characterized in that** the water-based, organic-polymer-containing composition contains polycarboxylates of the type that represent polymers or copolymers, preferably polymers, of α,β-unsaturated carboxylic acids, preferably selected from cinnamic acid, crotonic acid, fumaric acid, itaconic acid, maleic acid, acrylic acid and/or methacrylic acid, particularly preferably from maleic acid, acrylic acid and/or methacrylic acid, very particularly preferably from acrylic acid and/or methacrylic acid.

8. The steel strip according to one or more of the preceding claims 3 to 7, **characterized in that** the water-based, organic-polymer-containing composition has an acid number (measured according to the method in the description) of at least 300 mg KOH per gram, preferably at least 400 mg KOH per gram, particularly preferably at least 500 mg KOH per gram, of the drying residue.

9. The steel strip according to one or more of the preceding claims 3 to 8, **characterized in that** the content of phosphonic acid groups and/or phosphoric acid groups and the esters thereof in the polymer component of the water-based, organic-polymer-containing composition is in total less than 1 mmol, preferably less than 0.5 mmol, particularly preferably less than 0.1 mmol, in each case per gram of the drying residue.

10. The steel strip according to one or more of the preceding claims 3 to 9, **characterized in that** the content of water-soluble compounds containing elements of groups I B, III B - VIII B of the periodic table is in each case less than 10 mg/kg, preferably less than 1 mg/kg, relative to the particular element and the water-based composition.

11. The steel strip according to one or more of the preceding claims 3 to 10, **characterized in that** the content of water-soluble compounds containing elements of the alkaline-earth metals is less than 10 wt.%, preferably less than 8 wt.%, particularly preferably less than 6 wt.%, relative to the dry residue of the water-based composition.

12. The steel strip according to one or more of the preceding claims 3 to 11, **characterized in that** the water-based composition additionally contains a pH-regulating compound, which is preferably selected from organic phosphonic acids, α-hydroxycarboxyhc acids and/or dicarboxylic acids, each with no more than 6 carbon atoms, nitric acid, phosphoric acid and/or sulfuric acid, particularly preferably from nitric acid and/or sulfuric acid.

13. The steel strip according to one or more of the preceding claims 3 to 12, **characterized in that** the pH of the water-based composition is not less than 1.5, preferably not less than 2.0, but preferably does not exceed the value 5.0, particularly preferably does not exceed the value 4.0.

14. A shaping method in which the steel strip according to one or more of the preceding claims 1 to 13 is optionally additionally oiled and then deep-drawn and preferably before deep-drawing but after oiling, blanks, preferably selected from round blanks, sheets, plates or boards, are separated off.

15. A component consisting of at least one steel strip blank shaped according to claim 14, preferably selected from automobile body parts, heat exchangers, white goods, profiles, pipes, cans, tanks or tubs.

## Revendications

1. Feuillard d'acier pourvu d'un enduit métallique de zinc ou d'aluminium sur une ou les deux faces, l'enduit présentant un revêtement sur au moins une face, lequel revêtement est sensiblement constitué d'au moins un polycarboxylate et est réalisé en une couche de carbone (mesuré selon la méthode dans la description), laquelle se trouve dans la plage de 10 à 100 mg/m², la proportion des constituants du revêtement, d'une masse molaire (mesurée selon la méthode dans la description) supérieure à 50 000 g/mol, étant supérieure à 50 % en poids par rapport au revêtement.

2. Feuillard d'acier selon la revendication 1, **caractérisé en ce que** le feuillard d'acier est galvanisé électrolytiquement ou raffiné par immersion à chaud des deux côtés, de préférence raffiné par immersion à chaud.

3. Feuillard d'acier selon l'une ou les deux revendications précédentes, pouvant être obtenu dans un procédé, dans lequel un film humide d'une composition à base d'eau contenant des polymères organiques est appliqué et séché sur la surface nue d'au moins un côté du feuillard d'acier pourvu d'un enduit métallique de zinc ou d'aluminium, le résidu de séchage de la composition à base d'eau étant sensiblement constitué d'au moins un polycarboxylate.

4. Feuillard d'acier selon la revendication 3, **caractérisé en ce que** la proportion des constituants dans la composition à base d'eau contenant des polymères organiques et d'une masse molaire supérieure à 50 000 g/mol, de préférence supérieure à 100 000 g/mol, de manière particulièrement préférée supérieure à 250 000 g/mol, représente au moins 50 % en poids, de préférence au moins 70 % en poids, de manière particulièrement préférée au moins 80 % en poids et de manière tout particulièrement préférée au moins 90 % en poids, par rapport au résidu de séchage.

5. Feuillard d'acier selon l'une ou les deux des revendications 3 et 4, **caractérisé en ce que** la composition à base d'eau contenant des polymères organiques contient un ou plusieurs polycarboxylates dont le poids moléculaire moyen en poids est respectivement d'au moins 100 000 g/mol, de préférence d'au moins 250 000 g/mol, de manière particulièrement préférée d'au moins 500 000 g/mol et de manière tout particulièrement préférée d'au moins 1 000 000 g/mol.

6. Feuillard d'acier selon une ou plusieurs des revendications précédentes 3 à 5, **caractérisé en ce que** la proportion de polycarboxylates dans la composition à base d'eau contenant des polymères organiques est supérieure à 85 % en poids, de préférence supérieure à 90 % en poids, de manière particulièrement préférée supérieure à 94 % en poids, par rapport au résidu de séchage.

7. Feuillard d'acier selon une ou plusieurs des revendications précédentes 3 à 6, **caractérisé en ce que** la composition à base d'eau contenant des polymères organiques contient des polycarboxylates qui contiennent des polymères ou des copolymères, de préférence des polymères, d'acides carboxyliques α,β-insaturés, de préférence choisis parmi l'acide cinnamique, l'acide crotonique, l'acide fumarique, l'acide itaconique, l'acide maléique, l'acide acrylique et/ou l'acide méthacrylique, de manière particulièrement préférée parmi l'acide maléique, l'acide acrylique et/ou l'acide méthacrylique, de manière tout particulièrement préférée parmi l'acide acrylique et/ou l'acide méthacrylique.

8. Feuillard d'acier selon une ou plusieurs des revendications précédentes 3 à 7, **caractérisé en ce que** la composition à base d'eau contenant des polymères organiques présente un indice d'acide (mesuré selon la méthode dans la description) d'au moins 300 mg de KOH par gramme, de préférence d'au moins 400 mg de KOH par gramme, de manière particulièrement préférée d'au moins 500 mg de KOH par gramme du résidu de séchage.

9. Feuillard d'acier selon une ou plusieurs des revendications précédentes 3 à 8, **caractérisé en ce que** la proportion de groupes acide phosphonique et/ou acide phosphorique et de leurs esters dans le constituant polymère de la composition à base d'eau contenant des polymères organiques est au total inférieure à 1 mmol, de préférence inférieure à 0,5 mmol, de manière particulièrement préférée inférieure à 0,1 mmol, respectivement par gramme du résidu de séchage.

10. Feuillard d'acier selon une ou plusieurs des revendications précédentes 3 à 9, **caractérisé en ce que** la proportion de composés hydrosolubles contenant des éléments des groupes I B, III B - VIII B du tableau périodique est respectivement inférieure à 10 mg/kg, de préférence respectivement inférieure à 1 mg/kg, par rapport à l'élément respectif et à la composition à base d'eau.

11. Feuillard d'acier selon une ou plusieurs des revendications précédentes 3 à 10, **caractérisé en ce que** la proportion de composés hydrosolubles contenant des éléments des métaux alcalino-terreux est inférieure à 10 % en poids, de préférence inférieure à 8 % en poids, de manière particulièrement préférée inférieure à 6 % en poids, par rapport au résidu de séchage et à la composition à base d'eau.

12. Feuillard d'acier selon une ou plusieurs des revendications précédentes 3 à 11, **caractérisé en ce que** la composition à base d'eau contient en outre un composé régulateur de pH, qui est de préférence choisi parmi les acides phosphoniques, les acides α-hydroxycarboxyliques et/ou les acides dicarboxyliques organiques comportant respectivement au plus 6 atomes de carbone, l'acide nitrique, l'acide phosphorique et/ou l'acide sulfurique, de manière particulièrement préférée parmi l'acide nitrique et/ou l'acide sulfurique.

13. Feuillard d'acier selon une ou plusieurs des revendications précédentes 3 à 12, **caractérisé en ce que** le pH de la composition à base d'eau n'est pas inférieur à 1,5, de préférence n'est pas inférieur à 2,0, mais de préférence ne dépasse pas 5,0, de manière particulièrement préférée ne dépasse pas 4,0.

14. Procédé de formage, dans lequel un feuillard d'acier selon une ou plusieurs des revendications précédentes 1 à 13 est éventuellement en outre huilé puis embouti, et de préférence des découpes, de préférence choisies parmi des flans, des tôles, des plaques ou des disques, sont séparées avant l'emboutissage, mais après l'huilage.

15. Pièce constituée d'au moins une découpe de feuillard d'acier conformée selon la revendication 14, de préférence choisie parmi les pièces de carrosserie automobile, les échangeurs de chaleur, les électroménagers, les profilés, les tuyaux, les bidons, les réservoirs ou les cuves.
